# EUROPÄISCHE PATENTANMELDUNG

(11) **EP 1 804 084 A1**
(43) Veröffentlichungstag der Anmeldung: **04.07.2007**
(21) Anmeldenummer: 05028717.6
(22) Anmeldetag: 30.12.2005
(51) Int. Cl.: G01V 1/18

(54) **Elektromagnetisch geschirmte Seismometereinheit mit Geophon**

(71) Anmelder: Integrated Dynamics Engineering GmbH, 65479 Raunheim (DE)
(72) Erfinder: Heiland, Peter, 65479 Raunheim (DE)
(74) Vertreter: Bill, Burkart Hartmut

(57) **Zusammenfassung**

Eine Aufgabe der Erfindung ist es, eine Geophonanordnung bereitzustellen, welche eine wesentlich verbesserte Störgrößenrobustheit, insbesondere gegenüber elektromagnetischen Störgrößen aufweist.

Die Erfindung schlägt hierzu eine Seismometereinheit vor, welche wenigstens ein, in einem Geophongehäuse beherbergtes Geophon (1, 2) mit wenigstens einer aus dem Geophongehäuse führenden Leitung (9) für ein elektrisches, insbesondere analoges, Ausgangssignal sowie wenigstes eine elektromagnetische Abschirmeinrichtung (4, 5, 6, 7) für das Geophon umfasst.

## Beschreibung

Die Erfindung betrifft eine Seismometereinheit mit wenigstens einem Geophon, also einem elektrodynamischen Schwingungsaufnehmer zur Erfassung von Schwingungen und deren Wandlung in analoge Signale für eine nachfolgende spezifische Auswerteeinrichtung.

Üblicherweise wird bei Geophonen zur Registrierung auch kleiner Erschütterungen durch Bewegungen oder Schwingungen eines Bodens oder einer Basis eine träge Masse eingesetzt, die gegenüber den Bewegungen oder Schwingungen des Bodens oder der Basis in Ruhe bleibt. Derartige Relativbewegungen werden herkömmlicherweise über eine Induktionsspannung mittels eines elektromechanischen bzw. elektrodynamischen Systems (bewegliche Spule in einem statischen Magnetfeld) gemessen. Das Geophon erzeugt einen analogen Datenstrom, welcher anschließend ausgewertet wird, meist unter zusätzlicher Nutzung eines A/D-Wandlers.

Bekannt ist es beispielsweise auch, bei (aktiven) Schwingungsisolationssystemen äußerst empfindliche Geophone als Schwingungssensoren einzusetzen, mit welchen bereits kleinste Schwingungen erfassbar sind und in analoge Signale (meist im µV bis mV-Bereich) gewandelt werden. Diese Signale werden anschließend applikationsspezifisch einer vom Geophon entfernten Auswerteeinheit zumeist leitungsgebunden zugeführt. Bei aktiven Schwingungsisolationssystem werden durch eine Steuer- und/oder Regeleinheit auf ausgewerteten Signalen basierend wiederum Aktoren zum Bewirken einer entsprechenden Kompensationsbewegung angesteuert. Ein einem Geophon "zugeordneter" Aktor befindet sich folglich auch in Nähe des Geophons.

Ein Wesentlicher Nachteil ist jedoch, dass Geophone zur Erfassung kleiner und kleinster Schwingungen folglich auch äußerst empfindlich gegenüber bereits kleinen Störgrößen, wie insbesondere elektromagnetisch eingekoppelten Störgrößen, einschließlich basierend auf Rück- /Querkopplungseffekte zwischen Geophon und zugeordnetem Aktor, sind. Dies macht sich in einer verschlechterten Qualität der analogen Signale und folglich in einer deutlich verminderten Auswertungsqualität registrierter Schwingungen bemerkbar.

Eine Aufgabe der Erfindung besteht darin, eine Geophonanordnung bereitzustellen, welche eine wesentlich verbesserte Störgrößenrobustheit, insbesondere gegenüber elektromagnetischen Störsignalen aufweist.

Die erfindungsgemäße Lösung ist auf höchst überraschende Weise bereits durch ein Geophon mit den Merkmalen eines der anhängigen unabhängigen Ansprüche gegeben.

Erfindungsgemäß ist somit eine Seismometereinheit vorgesehen, die wenigstens ein, in einem Geophongehäuse beherbergtes Geophon mit wenigstens einer aus dem Geophongehäuse führenden Leitung für ein elektrisches, insbesondere analoges, Ausgangssignal sowie wenigstes eine elektromagnetische Abschirmeinrichtung für das Geophon umfasst.

Von Wesentlichem Vorteil ist somit insbesondere, dass hierdurch bereits die elektromagnetische Empfindlichkeit des Sensors deutlich reduziert wird, und folglich eine qualitativ verbesserte Selektivität bei der Überwachung von mechanischen Schwingungen aufgrund von Bodenschwingungen und/oder auch akustischen Anregungen, insbesondere auch beim Einsatz in Schwingungsisolationssystemen, z.B. bei der Waferherstellung, gewährleistet ist.

Bevorzugt ist hierbei ferner vorgesehen, dass die Seismometereinheit ein äußeres Seismometergehäuse zur Aufnahme des Geophongehäuses aufweist bzw. ausbildet, welches zweckmäßigerweise starr bzw. mechanisch stabil mit dem Geophongehäuse verbunden ist. Zur Gewährleistung einer guten mechanischen Stabilität ist das Seismometergehäuse in einer bevorzugten Ausführung aus Vollmaterial gebildet.

Insbesondere auch, um anwendungsspezifisch auf im Wesentlichen jegliche Geophone zurückgreifen zu können, ist ferner vorgesehen, dass das Seismometergehäuse die elektromagnetische Abschirmeinrichtung aufweist, wobei die elektromagnetische Abschirmeinrichtung vorzugsweise mittels eines elektrischen leitenden Materials des Seismometergehäuses, insbesondere einer an dem Seismometergehäuse aufgebrachten elektrisch leitenden Schicht bereitgestellt ist.

In bevorzugter Ausführungsform weist die Seismometereinheit wenigstens zwei mechanisch miteinander verbindbare Gehäuseteile auf, wobei zur Erzielung einer im vollumfänglichen elektromagnetischen Schirmungsfunktionalität der Seismometereinheit, jedes der miteinander verbindbaren Gehäuseteile eine elektromagnetische Abschirmeinrichtung umfasst. Hierzu ist zweckmäßigerweise ferner zwischen Gehäuseteilen im verbundenen Zustand eine elektromagnetisch schirmende Dichtung angeordnet oder ausgebildet. Für eine solche Dichtung hat sich z.B. eine Labyrinthdichtung als geeignet erwiesen.

Sind von der Seismometereinheit mehrere Geophone umfasst, ist bevorzugt auch zwischen diesen elektromagnetisch schirmendes Seismometergehäuse ausgebildet.

Bevorzugt ist ferner vorgeschlagen, die Seismometereinheit mit einer nach außen führenden elektromagnetisch geschirmten Leitungsdurchführung auszubilden.

Gemäß besonders bevorzugter Ausführungsformen, umfasst die Seismometereinheit ferner wenigstens einen innerhalb der elektromagnetischen Abschirmeinrichtung angeordneten Vorverstärker, der eingangsseitig mit der aus dem Geophongehäuse führenden Leitung verbunden ist. Durch einen solchen zusätzlichen Einbau eines Signal-Vorverstärkers in die selbe Seismometereinheit wird die Störempfindlichkeit des Sensorsignals wesentlich reduziert, insbesondere auch, weil die benötigten Leitungswege bis zur Signalvorverstärkung deutlich reduziert sind.

Entsprechend ist bevorzugt vorgesehen durch die aus der Seismometereinheit nach außen führende Leitungsdurchführung eine Leitung für ein elektrisches Ausgangssignal des innerhalb des Seismometergehäuses angeordneten Vorverstärker zu führen.

Ferner umfassen bevorzugte Seismometereinheiten nach der Erfindung einen Vorverstärker mit wenigstens einem HF-Filter zum weiteren Ausfiltern von Störsignaleinkopplungen.

Zweckmäßigerweise ist ein in der Seismometereinheit integrierter Vorverstärker überdies als rauscharmer Vorverstärker anwendungsspezifisch konditioniert.

Die Erfindung sieht folglich bevorzugt auch (aktive) Schwingungsisolationssysteme mit wenigstens einer vorbeschriebenen Seismometereinheit vor.

Insgesamt wird somit durch Einbau des wenigstens einen Geophons in ein elektromagnetisch geschirmtes Gehäuse und insbesondere durch weiteren Einbau wenigstens eines rauscharmen Vorverstärkers in das selbe Gehäuse das/die Sensorsignal/e in verbesserter Form verstärkt und entzerrt. Ein so verstärktes und entzerrtes Signal kann anschließend von der Seismometereinheit aus zu einer entfernten Auswerteeinheit und/oder zu einem Steuer-/Regelgerät übertragen werden und zwar bei wesentlich verringerter Beeinflussung durch elektromagnetische Störgrößen.

Weitere Vorteile und Merkmale werden aus der nachfolgenden Beschreibung eines bevorzugten, jedoch lediglich beispielhaften, erfindungsgemäßen Ausführungsform unter Bezugnahme auf die Zeichnungen ersichtlich, wobei in den Zeichnungen zeigen:
- Fig. 1: eine schematische Prinzipskizze einer erfindungsgemäßen Seismometereinheit,
- Fig. 2: eine Aufsicht auf eine erfindungsgemäßen Seismometereinheit bei geöffneten Zustand des Seismometergehäuses,
- Fig. 3: eine Aufsicht auf die erfindungsgemäßen Seismometereinheit nach Fig. 2 in geschlossenen Zustand des Seismometergehäuses,
- Fig. 4: eine Seitenansicht der erfindungsgemäßen Seismometereinheit nach Fig. 2,
- Fig. 5: eine im Wesentliche isometrische und eine geschnittene Ansicht eines Geophons, und
- Fig. 6: eine Prinzipskizze einer Tauchspule.

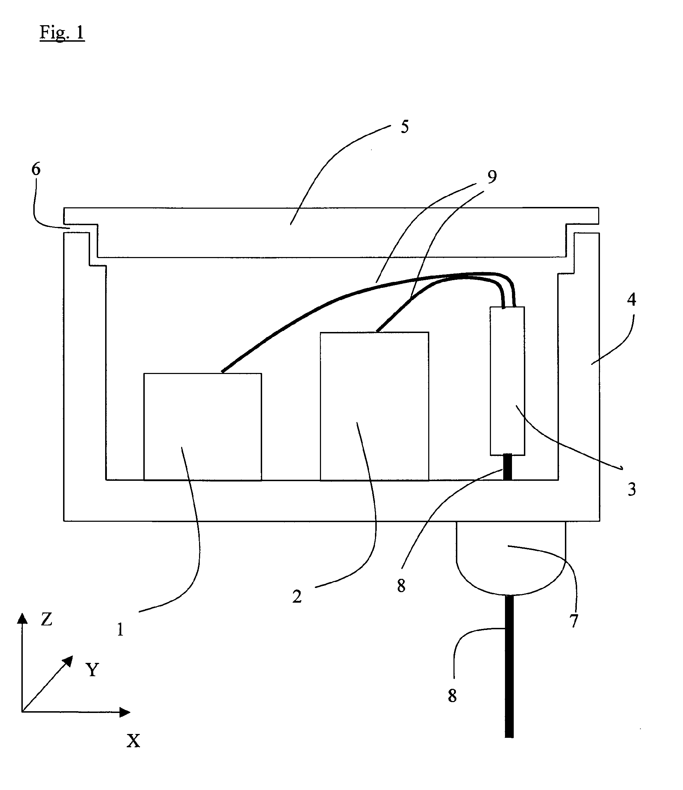

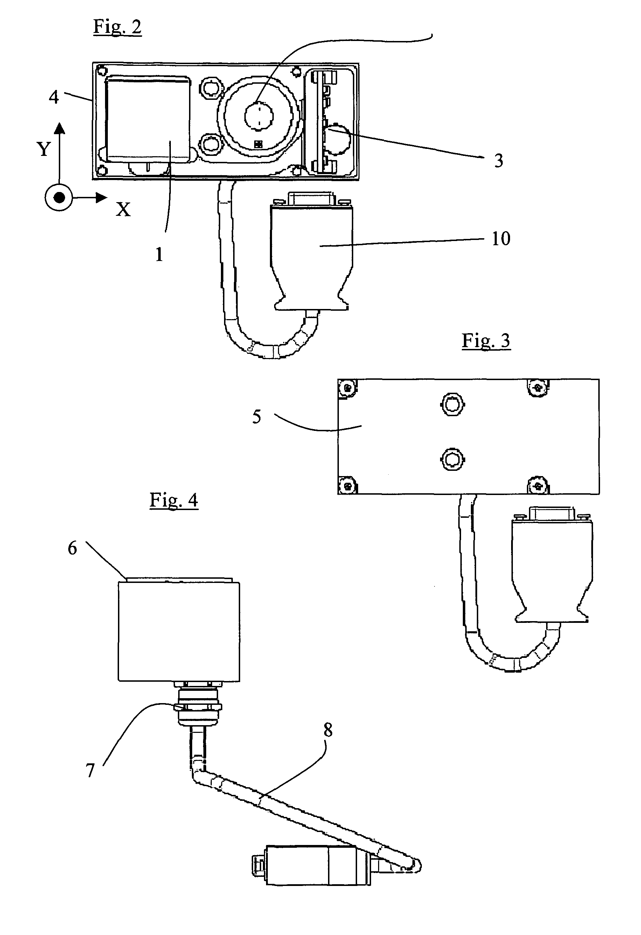

Unter nachfolgender Bezugnahme insbesondere auf die Fig. 1, 2 3 und 4 wird eine bevorzugte Ausführungsform der Erfindung beispielhaft näher beschrieben

Die Figuren 1 bis 4 zeigen erfindungsgemäße Seismometereinheiten, jeweils in Art einer schematischen Prinzipskizze, einer Aufsicht bei geöffnetem Seismometergehäuse, einer Aufsicht bei geschlossenem Seismometergehäuse bzw. einer Seitenansicht.

Die Seismometereinheit besitzt die äußere Form einer Kiste oder einer Box und ist elektromagnetisch abschirmend ausgebildet. Die Seismometereinheit umfasst zwei im Innern angeordnete Geophone 1 und 2. Das erste Geophon 1 ist z.B. als horizontales Geophon ausgebildet und das andere Geophon 2 als vertikales Geophon. Folglich erfasst das Geophon 1 gemäß Fig. 1 je nach Ausrichtung Wellen bzw. Schwingungen die in X- oder Y-Richtung verlaufen und gemäß Fig. 2 Wellen bzw. Schwingungen die in Y-Richtung verlaufen. Das Geophon 2 erfasst gemäß Fign. 1 und 2 Wellen bzw. Schwingungen die in Z-Richtung verlaufen.

Bekanntermaßen sind Geophone, auch als elektrodynamische Schwingungsaufnehmer bezeichnet, grundsätzlich hoch sensible bzw. empfindliche Bewegungssignalumformer in Bezug auf Bewegungen eines Bodens oder einer Basis relativ zu einem raumfesten Koordinatensystem. Hierfür wird üblicherweise die Auslenkung einer Pendeleinrichtung relativ zum mit dem Boden oder der Basis mechanisch starr verbundenen Geophongehäuse genutzt, wobei die Auslenkung der Pendeleinrichtung in ein elektrisches Signal, insbesondere Spannungsignal, umgewandelt wird. Das elektrische, meist analoge Signal wird daraufhin in einer Signalauswerteeinrichtung ausgewertet.

Bei Nutzung eines solchen Geophons innerhalb eines Schwingungsisolationssystems werden basierend auf dem ausgewerteten Signal wiederum Aktoren zum Entgegenwirken der erfassten Schwingungen oder Bewegungen entsprechend angesteuert oder geregelt.

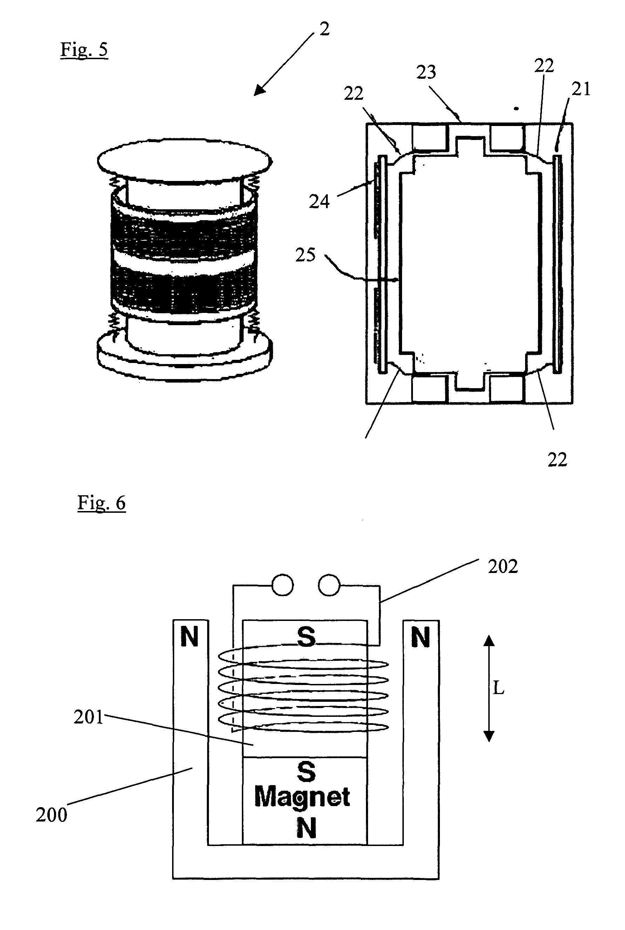

Bei Fig. 5 ist in einer im Wesentlichem isometrischen und einer geschnittenen Ansicht ein Geophon 2 dargestellt, welches die Bewegung einer um einen Zylinder 21 gewickelten und über Federn 22 beweglich am Geophongehäuse 23 gehaltenen Spule 24 im Feld eines mit dem Gehäuse 23 mechanisch starr verbundenen Permanentmagneten 25 nutzt, um ein analoges Ausgangssignal zu generieren. Ein solches Geophon besitzt z.B. eine Resonanzfrequenz von etwa 4,5Hz, eine Nachweismasse von etwa 23 Gramm und eine Spitzenempfindlichkeit von 20 V/g, also 20 Volt pro Erdbeschleunigung.

Das Prinzip eines solchen Geophon basiert somit im Wesentlichen darauf, eine Art von Spule, die am Pendel befestigt ist oder dieses mit ausbildet, entlang einen Dauermagneten zu bewegen oder in einen Topfmagneten einzutauchen. Grundsätzlich ist jedoch auch die mechanisch stabile Befestigung der Spule und eine bewegliche Verbindung eines Magneten am Gehophongehäuse möglich.

Fig. 6 zeigt einen Schnitt durch einen seh einfach aufgebauten Topfmagneten in dem eine Tauchspule eintaucht. Der Topfmagnet besteht hierbei aus einem Hohlzylinder 200, der als Polschuh für den einen magnetischen Pol dient. Der andere magnetische Pol wird durch einen Vollzylinder 201 in der Achse des äußeren Hohlzylinders gebildet. In den Spalt zwischen Hohlzylinder und Vollzylinder taucht eine in Richtung der Zylinderachse bewegliche Tauchspule 202 ein, so dass in der Tauchspule eine Spannung U(t) induziert wird, die proportional zur Geschwindigkeit der Lageänderung L des Pendels ist.

Die Geophone 1 und 2 der Seismometereinheit sind, insbesondere bei Nutzung für ein aktives Schwingungsisolationssystem, somit hoch empfindlich bereits gegen äußerst schwache Schwingungsignale, nachfolgend als Nutzsignale bezeichnet, aber auch empfindlich gegen schwache elektromagnetische Störungen, nachfolgend als Störsignale bezeichnet. Bei Nutzung von Geophonen für ein aktives Schwingungsisolationssystem muss ferner beachtet werden, dass der Abstand zwischen einem Geophon und einem dem Geophon zugeordneten Aktor häufig sehr gering ist, so dass es auch zwischen diesen Komponenten zu Rück- /Querkopplungseffekten kommen kann.

Eine erfindungsgemäße Seismometereinheit gemäß den Fign. 1 bis 4 umfasst ferner einen rauscharmen Vorverstärker 3, der zweckmäßigerweise zusätzlich einen HF-Filter gegen Störsignaleinkopplungen über die von den Geophonen 1 und 2 zum Vorverstärker führenden Zuleitungen 9 (Fig. 1) aufweist.

Ferner weist die Seismometereinheit zwei miteinander verbindbare Gehäuseteile auf, im vorliegenden Beispiel einen Gehäusegrundkörper 4 und einen Gehäusedeckel 5. Um ein weiteres unerwünschtes Schwingungssystem zu vermeiden, ist der Gehäusegrundkörper starr bzw. mechanisch fest mit den Gehäusen der Geophone 1 und 2 verbunden. Beide Gehäuseteile 4 und 5 bilden zusammen im Verbindungsbereich eine Labyrinthdichtung 6 aus. Der Gehäusegrundkörper 4 weist ferner eine Leitungsdurchführung 7 nach außen auf, durch welche ein von dem Vorverstärker 3 kommendes Ausgangssignal über eine Leitung 8 einer nicht dargestellten Auswerteeinheit und/oder Steuer-Regeleinheit zugeführt werden kann. Die Leitung 8 weist hierzu an ihrem von der Seismometereinheit entfernten Ende einen entsprechend angepassten Kopplungsstecker 10 auf.

Der Gehäusegrundkörper 4, der Gehäusedeckel 5, die Labyrinthdichtung 6 und die Leitungsdurchführung 8 sind elektromagnetisch geschirmt. Zweckmäßigerweise umfasst auch die Leitung 8 eine elektromagnetische Schirmung.

Das Seismometergehäuse ist z.B. aus Aluminium geformt. Um eine gute elektromagnetische Schirmwirkung zu erzielen, einschließlich an den Fügestellen, ist bevorzugt vorgesehen, dass eine elektrisch leitende Schicht auf die Seismometereinheit aufgebracht ist, bspw. eine elektrisch leitende Eloxalschicht.

Da das Gehäuse neben der Schirmfunktion ferner eine gute mechanische Stabilität für die Übertragung des Schwingungssignals auf das Geophon 1 und 2 besitzen soll, sind Vollmaterialien gegenüber Blechkonstruktionen grundsätzlich geeigneter.

Insbesondere für eine gute Schirmwirkung sind auch andere Materialien oder Schichten einsetzbar, z.B. Stahl, Edelstahl, Weißblech, Kupfer, Messing, Nickel, Zinn.

Bei Anwendung der Seismometereinheit für Schwingungsisolationssystemen in der Halbleiterfertigung sind hingegen kupferhaltige Materialien wie Messing oder Kupfer häufig weniger geeignet.

Insbesondere bei Anwendung der Seismometereinheit für Schwingungsisolationssystemen liegen die Nutzsignalgrößen im Bereich von 10µV bis 1mV. Die Störsignalgrößen für eine ausreichende Signalauswertung dürfen häufig 1µV nicht überschreiten. Der Nutzsignal-Frequenzbereich liegt üblicherweise zwischen 0,5Hz und 500Hz. Um eine ausreichende Störsicherheit zu erhalten sollte z.B. ein Bereich zwischen 0,1Hz und 2000Hz störungsfrei sein.

Der rauscharme Vorverstärker ist anwendungsspezifisch mit einer so geringen Rauschzahl ausgelegt, dass auch ein kleines bzw. schwaches Nutzsignal derart selektiert und verstärkt werden kann, dass ein nachfolgend auftretendes Rauschen bei nachfolgenden Signalstufen, insbesondere Signalauswertestufen, vernachlässigbar ist.

Auch wenn Störsignale häufig im Bereich von 9kHz bis 10GHz liegen, kann aus Gründen der Elektronik im rauscharmen Vorverstärker die Amplitudenmodulation des hochfrequenten Störsignals im Nutzsignal-Frequenzbereich erscheinen. Eine einfache Filterung ist oftmals nicht möglich, da die elektromagnetische Kopplung grundsätzlich über den gesamten Signalweg erfolgen kann, also auch nach einer Filterstelle. Aus diesem Grunde sind die aufwendigen Abschirmmaßnahmen der Seismometereinheit von hohem Nutzen.

## Patentansprüche

1. Seismometereinheit, umfassend wenigstens ein, in einem Geophongehäuse beherbergtes Geophon (1, 2) mit wenigstens einer aus dem Geophongehäuse führenden Leitung für ein elektrisches, insbesondere analoges, Ausgangssignal, und **gekennzeichnet durch** wenigstes eine elektromagnetische Abschirmeinrichtung (4, 5, 6, 7) für das Geophon (1, 2).

2. Seismometereinheit nach vorstehendem Anspruch, wobei die Seismometereinheit ein äußeres Seismometergehäuse aufweist.

3. Seismometereinheit nach vorstehendem Anspruch, wobei das Seismometergehäuse starr bzw. mechanisch stabil mit dem Geophongehäuse verbunden ist.

4. Seismometereinheit nach Anspruch 2 oder 3, wobei das Seismometergehäuse aus Vollmaterial hergestellt ist.

5. Seismometereinheit nach einem der Ansprüche 2 bis 4, wobei das Seismometergehäuse die elektromagnetische Abschirmeinrichtung aufweist.

6. Seismometereinheit nach vorstehendem Anspruch, wobei die elektromagnetische Abschirmeinrichtung mittels eines elektrisch leitenden Material des Seismometergehäuses, insbesondere einer an dem Seismometergehäuse aufgebrachten elektrisch leitenden Schicht bereitgestellt ist.

7. Seismometereinheit nach einem der Ansprüche 2 bis 6, wobei das Seismometergehäuse wenigstens zwei miteinander verbindbare Gehäuseteile umfasst.

8. Seismometereinheit nach vorstehendem Anspruch, wobei jedes der miteinander verbindbaren Gehäuseteile eine elektromagnetischen Abschirmeinrichtung umfasst.

9. Seismometereinheit nach einem der Ansprüche 7 oder 8, wobei zwischen Gehäuseteilen im verbundenen Zustand eine elektromagnetisch schirmende Dichtung angeordnet oder ausgebildet ist.

10. Seismometereinheit nach vorstehendem Anspruch, wobei die Dichtung eine Labyrinthdichtung (6) ist.

11. Seismometereinheit nach einem der vorstehenden Ansprüche, wobei zwischen einzelnen Geophonen (1, 2) eine elektromagnetisch schirmende Einrichtung ausgebildet ist.

12. Seismometereinheit nach einem der vorstehenden Ansprüche, wobei die aus dem Geophongehäuse führende Leitung mit einem Vorverstärker (3) verbunden ist, welcher innerhalb der elektromagnetischen Abschirmeinrichtung angeordnet ist.

13. Seismometereinheit nach einem der Ansprüche 2 bis 12, wobei das Seismometergehäuse eine nach außen führende elektromagnetisch geschirmte Leitungsdurchführung aufweist.

14. Seismometereinheit nach vorstehendem Anspruch, wobei durch die Leitungsdurchführung eine Leitung für ein elektrisches Ausgangssignal eines innerhalb des Seismometergehäuses angeordneten Vorverstärker geführt ist.

15. Seismometereinheit nach einem der Ansprüche 12 oder 14, wobei der Vorverstärker ein HF-Filter zum Ausfiltern von Störsignaleinkopplungen umfasst.

16. Seismometereinheit nach einem der Ansprüche 12, 14 oder 15, wobei der Vorverstärker als rauscharmer Vorverstärker konditioniert ist.

17. Schwingungsisolationssystem, insbesondere ein aktives Schwingungsisolationssystem, mit wenigstens einer Seismometereinheit nach einem der vorstehenden Ansprüche.
